# EUROPÄISCHE PATENTANMELDUNG

(11) **EP 1 544 495 A2**
(43) Veröffentlichungstag der Anmeldung: **22.06.2005**
(21) Anmeldenummer: 04029288.0
(22) Anmeldetag: 10.12.2004
(51) Int. Cl.: F16F 1/362

(54) **Körperschallabsorbierendes Dämpfungselement**

(30) Priorität: 18.12.2003 DE 10359525
(71) Anmelder: DaimlerChrysler AG, 70567 Stuttgart (DE)
(72) Erfinder: Schnur, Jürgen, 71254 Ditzingen (DE); Tomaschko, Silvia, Dr., 89075 Ulm (DE)

(57) **Zusammenfassung**

Ein körperschallabsorbierendes Dämpfungselement (14), das in eine Trennfuge zwischen einer ersten Komponente (10) und einer zweiten Komponente (12) einer Baugruppe eingefügt ist, ist aus einem Metalldrahtgestrick (16) aufgebaut, das in ein in Verbindungsrichtung zwischen der ersten und der zweiten Komponente (10, 12) flaches Formelement gepresst ist. Dieses Dämpfungselement (14) kann vorteilhaft zum Beispiel zwischen einem Kurbelgehäuse (10) eines Kraftfahrzeugmotors einerseits und einem Motorträger, einer Ölwanne oder dergleichen andererseits angeordnet werden, um das Schwingverhalten bzw. die Körperschallübertragung der so gebildeten Baugruppe zu verbessern.

## Beschreibung

Die vorliegende Erfindung betrifft ein körperschallabsorbierendes Dämpfungselement zum Einfügen in eine Trennfuge zwischen einer ersten Komponente und einer zweiten Komponente einer Baugruppe, insbesondere einer Baugruppe eines Motors eines Kraftfahrzeugs.

Bei zahlreichen Baugruppen, die aus mehreren Komponenten aufgebaut sind, ist es von Vorteil, zwischen den einzelnen Komponenten Trennfugen vorzusehen, in denen ein Dämpfungselement angeordnet ist, um das Schwingverhalten bzw. die Körperschallübertragung der Baugruppe zu verbessern. Dies gilt insbesondere auch für verschiedene Baugruppen eines Motors eines Kraftfahrzeugs, bei denen zum Beispiel ein Kurbelgehäuse mit einem Motorträger oder einer Ölwanne über ein solches Dämpfungselement in der Trennfuge zwischen den zwei Komponenten verbunden ist.

Es ist daher eine Aufgabe der vorliegenden Erfindung, ein körperschallabsorbierendes Dämpfungselement vorzusehen, welches zwischen eine erste Komponente und eine zweite Komponente einer Baugruppe eingefügt werden kann und das Schwingverhalten bzw. die Körperschallübertragung der Baugruppe wesentlich verbessert und gleichzeitig eine hohe Temperatur- und Korrosionsfestigkeit aufweist.

Diese Aufgabe wird durch ein körperschallabsorbierendes Dämpfungselement mit den Merkmalen des Anspruchs 1 gelöst. Vorteilhafte Ausgestaltungen und Weiterbildungen der Erfindung sind Gegenstand der Unteransprüche 2 bis 10.

Das körperschallabsorbierende Dämpfungselement der Erfindung ist aus einem Metalldrahtgestrick aufgebaut, das in ein in Verbindungsrichtung zwischen der ersten und der zweiten Komponente flaches Formelement gepresst ist. Im Rahmen der vorliegenden Erfindung wird unter dem Begriff "Gestrick" sowohl ein Gestrick als auch ein Gewebe, Geflecht, Gewirk oder Vlies verstanden, die alle aus einem geeigneten Metalldraht gebildet sind.

Das Metalldrahtgestrick gewährleistet aufgrund der seiner Konstruktion inhärenten Coulomb'schen Reibung in der Trennfuge zwischen den beiden Komponenten die Dämpfung und verbessert hierdurch das Schwingverhalten der gesamten Baugruppe. Darüber hinaus zeigt das Metalldrahtgestrick eine hohe Temperatur- und Korrosionsfestigkeit, eine gute plastische Verformbarkeit und ein hohes Energieabsorptionsvermögen, sodass es insbesondere auch für Baugruppen eines Motorsystems eines Kraftfahrzeugs gut geeignet ist.

In einer Ausgestaltung der Erfindung besitzt das Formelement eine hohle Querschnittsform, mit anderen Worten ist das Formelement polygonförmig mit einem unausgefüllten Innenraum aufgebaut.

In einer bevorzugten Ausführungsform ist das Metalldrahtgestrick einseitig oder auch beidseitig mit einer Deckschicht aus einem metallischen oder nicht-metallischen Material, besonders bevorzugt aus einem elastomeren Material versehen. Mittels dieser Deckschichten kann das Schwing- und Übertragungsverhalten über weite Frequenzbereiche gezielt beeinflusst werden. Im Fall der Verwendung eines Elastomers für die Deckschichten wird außerdem die Dichtfunktion des Dämpfungselements verbessert und das Dämpfungsverhalten wird durch Scherung verstärkt.

In einer alternativen Ausführungsform der Erfindung sind zwei Metalldrahtgestricke vorgesehen, zwischen denen eine Einlage aus einem metallischen oder nicht-metallischen Material, vorzugsweise einem elastomeren Material angeordnet ist. Auch in diesem Fall kann das Schwing- und Übertragungsverhalten des Dämpfungselements über weite Frequenzbereiche gezielt beeinflusst werden.

Das Dämpfungselement der Erfindung ist besonders bevorzugt bei einer Anordnung aus einer ersten Komponente und einer zweiten Komponente einer Baugruppe einsetzbar, wobei die erste und die zweite Komponente Bauteile eines Motorsystems eines Kraftfahrzeugs sein können.

Hierbei können die erste und die zweite Komponente zum Beispiel ein Kurbelgehäuse, ein Motor, ein Motorträger, ein Nebenaggregat, eine Ölwanne, ein Getriebegehäuse oder dergleichen des Motorsystems sein.

Weitere Merkmale und Merkmalskombinationen ergeben sich aus der Beschreibung sowie den Zeichnungen. Konkrete Ausführungsbeispiele der Erfindung sind in den Zeichnungen vereinfacht dargestellt und in der nachfolgenden Beschreibung näher erläutert. Dabei zeigen:
- Fig. 1: in schematischer Darstellung ausschnittweise eine Baugruppe aus einer ersten und einer zweiten Komponente, wobei in der Trennfuge zwischen den beiden Komponenten ein Dämpfungselement gemäß der vorliegenden Erfindung eingefügt ist;
- Fig. 2: eine Querschnittsdarstellung und eine Draufsicht eines Dämpfungselements gemäß einem ersten Ausführungsbeispiel der vorliegenden Erfindung;
- Fig. 3: eine Querschnittsdarstellung eines Dämpfungselements gemäß einem zweiten Ausführungsbeispiel der Erfindung;
- Fig. 4: eine Querschnittsdarstellung eines Dämpfungselements gemäß einem dritten Ausführungsbeispiel der Erfindung;
- Fig. 5: eine Querschnittsdarstellung eines Dämpfungselements gemäß einem vierten Ausführungsbeispiel der Erfindung;
- Fig. 6: eine schematische Darstellung eines Ausschnitts einer weiteren Baugruppe, bei welcher ein Dämpfungselement der vorliegenden Erfindung eingesetzt ist; und
- Fig. 7: eine schematische Darstellung eines Ausschnitts einer noch weiteren Baugruppe, in welcher ein Dämpfungselement gemäß der vorliegenden Erfindung eingesetzt ist.

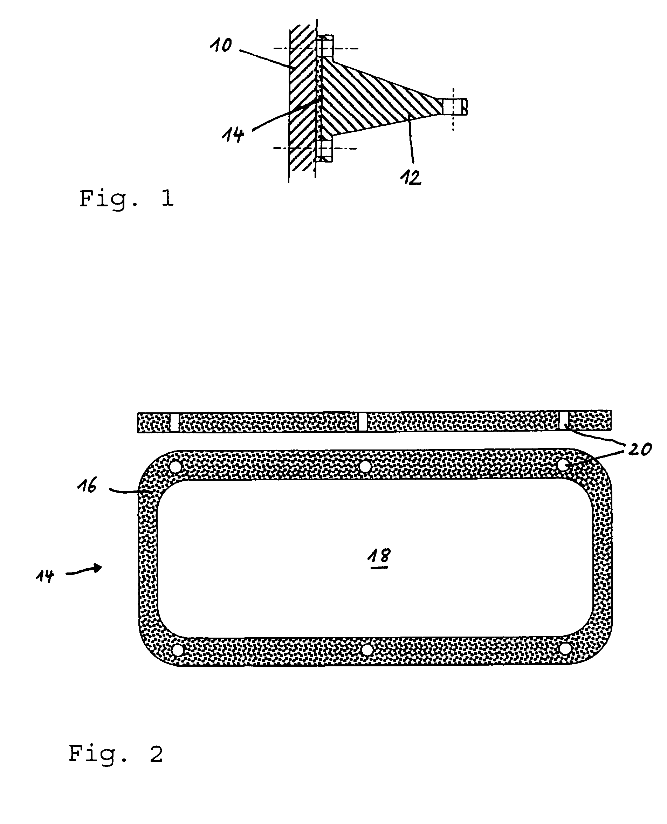

Die Darstellungen der Fig. 1, 6 und 7 zeigen ausschnittweise verschiedene Baugruppen eines Motorsystems eine Kraftfahrzeugs, bei denen ein Dämpfungselement gemäß der vorliegenden Erfindung vorteilhaft einsetzbar ist. Anhand der Fig. 2 bis 5 werden verschiedene Ausführungsbeispiele eines körperschallabsorbierenden Dämpfungselements gemäß der vorliegenden Erfindung erläutert.

Fig. 1 zeigt zunächst eine Verbindungsstelle zwischen einem Kurbelgehäuse 10 als erster Komponente der Erfindung und einem Motorträger oder einem Nebenaggregat 12 als zweite Komponente der Erfindung. In der Trennfuge zwischen dem Kurbelgehäuse 10 und dem Motorträger 12 ist ein körperschallabsorbierendes Dämpfungselement 14 angeordnet. Durch das körperschallabsorbierende Dämpfungselement 14 wird das Schwingverhalten bzw. die Körperschallübertragung der gesamten Baugruppe wesentlich verbessert, wobei die Dämpfung in der Trennfuge sowohl aus akustischen als auch aus schwingungstechnischen Gründen erwünscht ist.

Wie in Fig. 2 dargestellt, ist das körperschallabsorbierende Dämpfungselement 14 der Erfindung, welches in die Trennfuge zwischen einer ersten Komponente 10 und einer zweiten Komponente 12 einer Baugruppe eingefügt werden kann, im wesentlichen aus einem Metalldrahtgestrick aufgebaut. Das Metalldrahtgestrick 16 ist in ein in Verbindungsrichtung zwischen der ersten und der zweiten Komponente 10, 12 flaches Formelement gepresst. Vorzugsweise besitzt dieses Formelement eine hohle Querschnittsform, d.h. es ist polygonförmig mit einem unausgefüllten Innenraum 18 aufgebaut, wie in der Draufsicht von Fig. 2 veranschaulicht. In dem Metalldrahtgestrick 16 sind ferner mehrere Durchbohrungen 20 vorgesehen, durch welche Befestigungselemente wie beispielsweise Nieten oder Schrauben hindurch greifen können, mit denen die zwei Komponenten 10 und 12 der Baugruppe miteinander befestigt werden.

Im Rahmen der vorliegenden Erfindung soll der Begriff "Gestrick" neben dem Gestrick auch Ausführungsformen wie Gewebe, Geflecht, Gewirk und Vlies umfassen. Das Metalldrahtgestrick 16 kann zum Beispiel aus Stahldrähten gebildet sein.

Ein Metalldrahtgestrick erhöht aufgrund seiner Coulomb'schen Reibung, welche seiner Konstruktion inhärent ist, in der Trennfuge die Dämpfung und verbessert dadurch das Schwingverhalten der gesamten Baugruppe. Außerdem zeigen solche Metalldrahtgestricke eine hohe Temperatur- und Korrosionsfestigkeit, sodass sie auch in der Umgebung eines Kraftfahrzeugmotors vorteilhaft einsetzbar sind.

Metalldrahtgestricke der hier beschriebenen und verwendeten Art sind aus dem Stand der Technik bereits grundsätzlich bekannt und werden auch bereits in verschiedenen Anwendungsfällen eingesetzt. So offenbaren zum Beispiel die DE 199 18 485 Cl und die EP 0 308 280 B1 verschiedene Verbundwerkstoffe, die im wesentlichen aus einem Metallgestrick aufgebaut sind, um dem Verbundwerkstoff eine hohe Festigkeit und ein hohes Energieabsorptionsvermögen zu verleihen. Spezielle, in der Technik bekannte Anwendungsmöglichkeiten eines Metalldrahtgestricks sind beispielsweise ein Schwingungsabsorber, der an einer körperschallabstrahlenden Struktur angebracht werden kann (DE 298 07 872 U1), ein Profilteil zum thermischen Isolieren von Rohren (DE 41 00 274 A1), ein Dehnungsausgleicher zwischen zwei Strukturen (DE 33 22 671 A1) oder ein elektromagnetisches Abschirmelement (US-A-4,037,009). In keinem dieser Dokumente wird jedoch die Anwendung eines Metalldrahtgestricks für ein Dämpfungselement im Sinne der vorliegenden Erfindung vorgeschlagen.

Das Dämpfungselement der vorliegenden Erfindung ist nicht auf spezielle Grundformen, Größen, Drahtstärken oder Maschengrößen des Metalldrahtgestricks eingeschränkt. Insbesondere können die Drahtstärke und die Maschengröße des Metalldrahtgestricks als Einstellparameter für die gewünschte Dämpfungswirkung des Dämpfungselements verwendet werden.

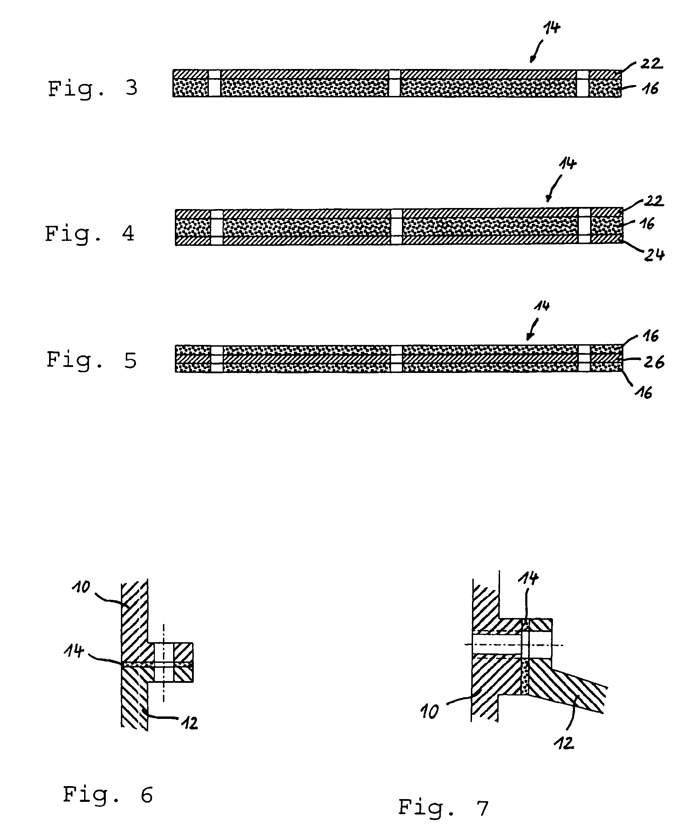

In einem zweiten Ausführungsbeispiel des erfindungsgemäßen Dämpfungselements ist das Metalldrahtgestrick 16 einseitig mit einer Deckschicht 22 versehen, wie in Fig. 3 veranschaulicht. Die Deckschicht 22 besteht aus einem metallischen oder nicht-metallischen Material, besonders bevorzugt aus einem elastomeren Material. Mit einer solchen Deckschicht kann das Schwing- und Übertragungsverhalten des Dämpfungselements 14 über weite Frequenzbereiche gezielt beeinflusst werden. Ist die Deckschicht 22 aus einem Elastomer aufgebaut, so kann außerdem die Dichtfunktion des Dämpfungselements 14 verbessert werden und das Dämpfungsverhalten durch Scherung verstärkt werden.

In einem weiteren Ausführungsbeispiel der Erfindung, das in Fig. 4 dargestellt ist, weist das Dämpfungselement 14 ein Metalldrahtgestrick 16 auf, das beidseitig mit einer Deckschicht 22 bzw. 24 versehen ist. Auch in diesem Fall können die beiden Deckschichten 22 und 24 aus metallischen oder nicht-metallischen, insbesondere elastomeren Materialien gebildet sein und es können die gleichen Vorteile wie bei dem zweiten Ausführungsbeispiel von Fig. 3 erzielt werden.

In einem vierten Ausführungsbeispiel eines erfindungsgemäßen Dämpfungselements ist das Dämpfungselement 14 aus zwei Metalldrahtgestricken 16 aufgebaut, zwischen denen eine Einlage 26 zwischengefügt ist. Diese Einlage 26 besteht wieder aus einem metallischen oder nicht-metallischen Material, insbesondere einem elastomeren Material, um die gleichen Vorteile wie bei den beiden Ausführungsbeispielen der Fig. 3 und 4 zu erzielen.

Sowohl die Deckschichten 22 und 24 als auch die Einlage 26 können jeweils sowohl aus einer einzelnen Schicht oder aus mehreren Schichten aufgebaut sein.

Fig. 6 zeigt ausschnittweise eine weitere Baugruppe, bei welcher ein Dämpfungselement der Erfindung eingesetzt werden kann. Das erfindungsgemäße Dämpfungselement 14 ist hier in einer Trennfuge zwischen einem Kurbelgehäuse 10 und einer Ölwanne 12 eingefügt, um die Schallabstrahlung der Ölwannenoberfläche zu minimieren.

Schließlich zeigt Fig. 7 ausschnittweise eine weitere Baugruppe, bei welcher ein erfindungsgemäßes Dämpfungselement 14 vorteilhaft eingesetzt werden kann. Das Dämpfungselement 14 ist hier in einer Trennfuge zwischen einem Kurbelgehäuse 10 und einem Getriebegehäuse 12 angeordnet, um das Schwingverhalten des Motorgetriebeblocks zu verbessern.

Das körperschallabsorbierende Dämpfungselement 14 der Erfindung kann besonders vorteilhaft bei Baugruppen eines Motorsystems eines Kraftfahrzeugs eingesetzt werden. Die erste und die zweite Komponente 10, 12, zwischen denen das Dämpfungselement 14 einzufügen ist, sind beispielsweise ein Kurbelgehäuse, ein Motorträger, eine Ölwanne, ein Getriebegehäuse, ein Nebenaggregat, ein Motor oder dergleichen.

## Patentansprüche

1. Körperschallabsorbierendes Dämpfungselement (14) zum Einfügen in eine Trennfuge zwischen einer ersten Komponente (10) und einer zweiten Komponente (12) einer Baugruppe,
**dadurch gekennzeichnet,**
**dass** das Dämpfungselement (14) aus einem Metalldrahtgestrick (16) aufgebaut ist, das in ein in Verbindungsrichtung zwischen der ersten und der zweiten Komponente (10, 12) flaches Formelement gepresst ist.

2. Dämpfungselement nach Anspruch 1,
**dadurch gekennzeichnet,**
**dass** das Formelement eine hohle Querschnittsform besitzt.

3. Dämpfungselement nach Anspruch 1 oder 2,
**dadurch gekennzeichnet,**
**dass** das Metalldrahtgestrick (16) einseitig mit einer Deckschicht (22) aus einem metallischen oder nicht-metallischen Material versehen ist.

4. Dämpfungselement nach Anspruch 1 oder 2,
**dadurch gekennzeichnet,**
**dass** das Metalldrahtgestrick (16) beidseitig mit einer Deckschicht (22, 24) aus einem metallischen oder nicht-metallischen Material versehen ist.

5. Dämpfungselement nach Anspruch 1 oder 2,
**dadurch gekennzeichnet,**
**dass** zwei Metalldrahtgestricke (16) vorgesehen sind, zwischen denen eine Einlage (26) aus einem metallischen oder nicht-metallischen Material angeordnet ist.

6. Dämpfungselement nach einem der Ansprüche 3 bis 5,
**dadurch gekennzeichnet,**
**dass** das nicht-metallische Material der Deckschicht (22, 24) bzw. der Einlage (26) ein elastomeres Material ist.

7. Anordnung aus einer ersten Komponente (10) und einer zweiten Komponente (12) einer Baugruppe, die über eine Trennfuge miteinander verbunden sind,
**dadurch gekennzeichnet,**
**dass** in der Trennfuge ein körperschallabsorbierendes Dämpfungselement (14) nach einem der Ansprüche 1 bis 6 zwischen der ersten und der zweiten Komponente (10, 12) angeordnet ist.

8. Anordnung nach Anspruch 7,
**dadurch gekennzeichnet,**
**dass** die erste und die zweite Komponente (10, 12) Bauteile eines Motorsystems eines Kraftfahrzeugs sind.

9. Anordnung nach Anspruch 8,
**dadurch gekennzeichnet,**
**dass** die erste Komponente (10) ein Kurbelgehäuse oder ein Motor ist.

10. Anordnung nach Anspruch 8 oder 9,
**dadurch gekennzeichnet,**
**dass** die zweite Komponente (12) ein Motorträger, ein Nebenaggregat, eine Ölwanne, ein Getriebegehäuse oder dergleichen ist.
